# EUROPÄISCHE PATENTANMELDUNG

(11) **EP 4 744 914 A1**
(43) Veröffentlichungstag der Anmeldung: **20.05.2026**
(21) Anmeldenummer: 24212933.6
(22) Anmeldetag: 14.11.2024

(54) **STOSSFÄNGERANORDNUNG FÜR EIN KRAFTFAHRZEUG**

(71) Anmelder: Benteler Automobiltechnik GmbH, 33102 Paderborn (DE)
(72) Erfinder: Hitz, Andreas, 59597 Erwitte (DE); Tatarinov, Konstantin, 33602 Bielefeld (DE); Schroeter, Martin, 33102 Paderborn (DE)
(74) Vertreter: Ksoll, Peter

(57) **Zusammenfassung**

Die Erfindung betrifft eine Stoßfängeranordnung (1) für ein Kraftfahrzeug, aufweisend einen sich in Kraftfahrzeugquerrichtung (Y) erstreckenden Querträger (2), wobei der Querträger (2) im Querschnitt als offenes Hohlprofil ausgebildet ist, und eine Abschlepphülse (8) zumindest abschnittsweise innerhalb des Hohlprofils angeordnet ist, wobei ein Verstärkungsblech (9) innerhalb des Hohlprofils angeordnet und mit dem Querträger (2) und der Abschlepphülse (8) verbunden ist. Die Abschlepphülse (8) ist mit dem Querträger (2) verbunden, wobei das Verstärkungsblech (9) im Wesentlichen senkrecht zur X-Y-Kraftfahrzeugebene und schräg zur Längsachse (L) der Abschlepphülse (8) orientiert ist, wobei ein Abschnitt (10) des Verstärkungsblechs (9) an eine äußere Kontur (11) der Abschlepphülse (8) angepasst ist und zumindest abschnittsweise entlang der äußeren Kontur (11) verläuft.

## Beschreibung

Die vorliegende Erfindung betrifft eine Stoßfängeranordnung für ein Kraftfahrzeug gemäß den Merkmalen im Oberbegriff des Patentanspruchs 1.

Aus dem Stand der Technik ist es bekannt, an einem Kraftfahrzeug frontseitig sowie heckseitig eine Stoßfängeranordnung zu montieren. Diese weist üblicherweise einen sich in Kraftfahrzeugquerrichtung erstreckenden Querträger auf, der mit dem übrigen Fahrgestell des Kraftfahrzeugs gekoppelt ist.

Um das Kraftfahrzeug abschleppen zu können, beispielsweise im Falle eines Unfalls oder Defekts, sind Abschlepphülsen mit dem vorderseitigen und/oder heckseitigen Querträger verbunden, insbesondere gefügt. Die Abschlepphülsen weisen ein innenseitiges Gewinde zur Kopplung mit einer Abschleppöse auf, die wiederum mit einem Abschleppfahrzeug verbunden werden kann.

Die Fügeverbindungen zwischen Abschlepphülse und Querträger unterliegen während des Abschleppvorgangs hohen Spannungen. Beim Abschleppen werden die Fügeverbindungen zwischen Abschlepphülse und Querträger insbesondere in Kraftfahrzeuglängsrichtung belastet.

Um entsprechende Belastungen zu reduzieren, offenbart die EP 2 054 246 B1 die Abschlepphülse über ein Verstärkungsblech mit dem Querträger zu koppeln. Die Abschlepphülse wird dabei mit dem Verstärkungsblech gefügt und das Verstärkungsblech anschließend mit dem Querträger verschweißt. Entscheidend gemäß der Lehre der EP 2 054 246 B1 ist, dass das Verstärkungsblech parallel zur Längsachse der Abschlepphülse ausgerichtet ist, um die während des Abschleppvorgangs auftretenden Belastungen möglichst effizient zu reduzieren.

Die Abschlepphülsen und die damit verbundenen Abschleppösen können auch zur Fixierung des Kraftfahrzeugs verwendet werden, beispielsweise während eines Transports des Kraftfahrzeugs zur See. Das Kraftfahrzeug kann beispielsweise über die mit den Abschlepphülsen gekoppelten Abschleppösen mittels Spanngurten mit dem Transportdeck des Schiffs verbunden werden. Abweichend von typischen Lastfällen beim Abschleppvorgang wirkt in diesem Fall auch eine signifikante Kraft in Kraftfahrzeugvertikalrichtung auf die Abschlepphülse, welche die Fügeverbindungen zwischen Abschlepphülse und Querträger zusätzlich belastet und zu einer Verformung des Querträgers führen kann. Da die Kraftfahrzeuge während des Seetransports über einen längeren Zeitraum am Transportdeck fixiert sind, ist hier insbesondere auch eine ausreichende Dauerhaltbarkeit der Fügeverbindungen zwischen Abschlepphülse und Querträger entscheidend.

Hiervon ausgehend ist die Aufgabe der vorliegenden Erfindung eine verbesserte Stoßfängeranordnung für ein Kraftfahrzeug aufzuzeigen, deren Abschlepphülse insbesondere auch in Kraftfahrzeugvertikalrichtung belastbar ist.

Die zuvor genannte Aufgabe wird mit einer Stoßfängeranordnung für ein Kraftfahrzeug mit den Merkmalen im Patentanspruch 1 gelöst.

Vorteilhafte Ausgestaltungsvarianten der Erfindung sind in den abhängigen Patentansprüchen beschrieben.

Die erfindungsgemäße Stoßfängeranordnung für ein Kraftfahrzeug weist einen sich in Kraftfahrzeugquerrichtung erstreckenden Querträger auf. Die Stoßfängeranordnung kann sowohl frontseitig, als auch heckseitig mit dem übrigen Fahrgestell des Kraftfahrzeugs verbunden sein.

Der Querträger ist im Querschnitt als offenes Hohlprofil ausgebildet. Dies bedeutet, dass insbesondere bei vier Seiten, mithin oben, unten, hinten, vorne, einer dieser Seiten offen ist. Das offene Hohlprofil kann auch als halboffen bezeichnet werden. Die sich dadurch ergebene Öffnung ist vorzugsweise in Kraftfahrzeuglängsrichtung vom Kraftfahrzeug wegzeigend orientiert. Dies bedeutet, bei einer an der Kraftfahrzeugfront montieren Stoßfängeranordnung zeigt die Öffnung in Fahrtrichtung, welche die Vorwärtsfahrrichtung ist, nach vorne. Bei einer heckseitig montierten Stoßfängeranordnung zeigt die Öffnung entsprechend in Fahrtrichtung nach hinten, mithin in Rückwärtsfahrrichtung.

Eine Abschlepphülse ist zumindest abschnittsweise innerhalb des Hohlprofils, mithin innerhalb des Querträgers angeordnet. Zumindest abschnittsweise bedeutet im Rahmen der Erfindung, dass wenigstens ein Teil der Abschlepphülse innerhalb des Hohlprofils bzw. des Querträgers angeordnet ist. Die Abschlepphülse ist mit dem Querträger verbunden.

Ferner ist ein Verstärkungsblech innerhalb des Hohlprofils bzw. Querträgers angeordnet und mit dem Querträger und der Abschlepphülse verbunden.

Die erfindungsgemäße Stoßfängeranordnung zeichnet sich nunmehr dadurch aus, dass das Verstärkungsblech im Wesentlichen senkrecht zur durch die Kraftfahrzeuglängsrichtung und Kraftfahrzeugquerrichtung aufgespannte Kraftfahrzeugebene angeordnet ist. Das Verstärkungsblech steht somit bezogen auf die Ebene, die durch seine längeren Seiten aufgespannt wird, senkrecht zur durch die Kraftfahrzeuglängsrichtung und Kraftfahrzeugquerrichtung aufgespannte Kraftfahrzeugebene.

Das Verstärkungsblech ist zudem schräg zur Längsachse der Abschlepphülse orientiert. Mithin ist zwischen dem Verstärkungsblech und der Längsachse der Abschlepphülse ein Winkel ausgebildet. Bevorzugt ist die Längsachse der Abschlepphülse in Kraftfahrzeuglängsrichtung ausgerichtet, so dass das Verstärkungsblech auch schräg zur Kraftfahrzeuglängsrichtung ausgerichtet ist.

Erfindungswesentlich ist weiterhin, dass ein Abschnitt des Verstärkungsblechs an eine äußere Kontur der Abschlepphülse angepasst ist und dieser Abschnitt zumindest abschnittsweise entlang der äußeren Kontur der Abschlepphülse verläuft. Der Abschnitt ist insbesondere durch eine gestreckte halbkreisförmige Einbuchtung ausgebildet.

Durch die erfindungsgemäße Anordnung des Verstärkungsblechs innerhalb des Querträgers und durch die erfindungsgemäße Kopplung des Verstärkungsblechs mit der Abschlepphülse werden die bei einer Fixierung des Kraftfahrzeugs über die Abschlepphülsen in Kraftfahrzeugvertikalrichtung wirkenden Kräfte von der Abschlepphülse auf das Verstärkungselement übertragen, so dass die Verbindungsstellen zwischen der Abschlepphülse und dem Querträger entlastet werden. Durch die Ausrichtung des Verstärkungsblechs senkrecht zur durch die Kraftfahrzeuglängsrichtung und Kraftfahrzeugquerrichtung aufgespannte Kraftfahrzeugebene können die in Kraftfahrzeugvertikalrichtung wirkenden Kräfte vorteilhaft von dem Verstärkungsblech aufgenommen werden. Die schräge Ausrichtung des Verstärkungsblechs zur Längsachse der Abschlepphülse ermöglicht, dass ein Abschnitt des Verstärkungsblechs an eine äußere Kontur, mithin an einer Außenseite der Abschlepphülse, angepasst sein kann und zumindest abschnittsweise entlang der äußeren Kontur der Abschlepphülse verläuft. Durch diese Aufnahme der Abschlepphülse durch das Verstärkungsblech wird die Abschlepphülse zusätzlich gegen eine in Kraftfahrzeugvertikalrichtung wirkende Kraft abgestützt. Die erfindungsgemäße Stoßfängeranordnung ermöglicht somit eine sichere Fixierung des Kraftfahrzeugs, beispielsweise zu Transportzwecken, wobei die Verbindungen zwischen der Abschlepphülse dem Verstärkungsblech und dem Querträger auch hohen Belastungen in Kraftfahrzeugvertikalrichtung über längere Wirkungszeiträume standhalten können und die Abschlepphülse somit auch in Kraftfahrzeugvertikalrichtung belastbar ist.

Die Biegesteifigkeit des Querträgers wird insbesondere dadurch sichergestellt, dass der Querschnitt U-förmig oder C-förmig ausgebildet ist. Dies bedeutet, dass bezogen auf die jeweilige Einbausituation rückseitig ein in Kraftfahrzeugvertikalrichtung orientierter Steg angeordnet ist. Von dem Steg erstrecken sich in Kraftfahrzeuglängsrichtung orientierte und sich gegenüberliegende Schenkel.

Der Querträger kann im Querschnitt auch hutförmig ausgebildet sein. Auch in diesem Fall weist der Querträger einen Steg und zwei gegenüberliegende und sich von dem Steg erstreckende Schenkel auf, wobei jeweils an einem freien Ende der Schenkel ein Flansch angeordnet ist, wobei der Flansch in Kraftfahrzeugvertikalrichtung orientiert ist.

Der Querträger kann ein Schließblech aufweisen.

Der zwischen der Längsachse der Abschlepphülse und dem Verstärkungsblech ausgebildete Winkel beträgt bevorzugt 5° bis 40°, insbesondere 10° bis 30°. Entsprechende Winkelintervalle haben sich im Rahmen der Erfindung als vorteilhaft für die Anbindung des Verstärkungsblechs an die Abschlepphülse herausgestellt. Insbesondere ist in den entsprechenden Winkelintervallen eine vorteilhafte Abstützung der Abschlepphülse durch das Verstärkungsblech gegeben.

Das Verstärkungsblech ist insbesondere mit dem Steg und den Schenkeln des Querträgers verbunden. Bevorzugt ist das Verstärkungsblech mit dem Steg und den Schenkeln des Querträgers gefügt, besonders bevorzugt verschweißt. Die äußere Kontur des Verstärkungsblechs kann somit an die durch den Steg und die Schenkel vorgegebene Form angepasst sein. Es ist möglich, dass das Verstärkungsblech vollständig entlang drei längeren Seiten mit dem Querträger verbunden ist. Die Eckbereiche sind dabei bevorzugt ausgespart.

Vorzugsweise ist das Verstärkungsblech mit der Abschlepphülse gefügt, insbesondere verschweißt. In einer besonders vorteilhaften Ausführungsvariante ist das Verstärkungsblech entlang des an die äußere Kontur der Abschlepphülse angepassten Abschnitts mit dieser gefügt. So kann ein sicherer Sitz zwischen der Abschlepphülse und dem Verstärkungsblech sichergestellt werden, so dass die Kraftübertragung von der Abschlepphülse auf das Verstärkungsblech gewährleistet ist. Die Schweißverbindung kann vollständig oder teilweise entlang des an die äußere Kontur der Abschlepphülse angepassten Abschnitts erfolgen.

Die Abschlepphülse ist entlang ihres Umfangs vollständig oder zumindest abschnittsweise mit dem Querträger und/oder mit einem mit dem Querträger gekoppelten Schließblech verbunden, bevorzugt gefügt, besonders bevorzugt verschweißt.

Bevorzugt ist das Verstärkungsblech aus dem Material des Querträgers gebildet. Das Verstärkungsblech und der Querträger können beispielsweise beide aus Stahl oder einer Aluminiumlegierung gebildet sein. Es muss jedoch nicht zwangsläufig dieselbe Legierung verwendet werden, sodass das Verstärkungsblech und der Querträger beispielsweise eine unterschiedliche Duktilität aufweisen können. Dies bietet den Vorteil, dass die Stoßfängeranordnung einfach und kostengünstig thermisch fügbar ist, insbesondere durch Schweißen.

Vorzugsweise weist das Verstärkungsblech eine Materialdicke von 1,5 mm bis 5 mm auf. Dies hat sich im Rahmen der Erfindung als guter Kompromiss zwischen der geforderten Verstärkungswirkung sowie dem Gewicht und den Herstellungskosten des Verstärkungsblechs erwiesen.

In einer besonders vorteilhaften Ausführungsvariante der Erfindung weist die Stoßfängeranordnung zwei Verstärkungsbleche auf, wobei die Verstärkungsbleche bevorzugt auf gegenüberliegenden Seiten der Abschlepphülse mit dieser verbunden sind. Durch die erfindungsgemäße Anordnung von zwei Verstärkungsblechen kann die auf die Abschlepphülse in Kraftfahrzeugvertikal- als auch in Kraftfahrzeuglängsrichtung wirkende Kraft noch vorteilhafter von den Verstärkungsblechen aufgenommen werden.

Die zwei Verstärkungsbleche können dieselbe Länge aufweisen und mit demselben Winkel zur Längsachse der Abschlepphülse ausgerichtet sein. Es ist jedoch auch denkbar, dass die Verstärkungselemente unterschiedliche Längen aufweisen und mit unterschiedlichen Winkeln zur Längsachse der Abschlepphülse ausgerichtet sind. Dies ist je nach Anwendungsfall anpassbar. Die Ausbildung von zwei gleich langen Verstärkungsblechen mit identischen Winkeln zur Abschlepphülse ermöglicht eine gleichmäßige Aufteilung der auf die Abschlepphülse wirkenden Kräfte auf die zwei Verstärkungsbleche.

Die zwei Verstärkungsbleche können an ihren zur Öffnung des Querträgers weisenden Enden miteinander verbunden, bevorzugt gefügt, besonders bevorzugt verschweißt sein. Die zwei Verstärkungsbleche sind von der durch die Kraftfahrzeugquerrichtung und Kraftfahrzeuglängsrichtung aufgespannte Fahrzeugebene aus betrachtet V-förmig ausgebildet Dies hat den Vorteil, dass die Verstärkungsbleche sich gegenseitig abstützen können, was sich wiederum vorteilhaft auf die Kraftübertragung auswirkt.

Auch ein einzelnes Verstärkungsblech kann von der durch die Kraftfahrzeugquerrichtung und Kraftfahrzeuglängsrichtung aufgespannte Fahrzeugebene aus betrachtet V-förmig ausgebildet sein, wobei die Spitze des Verstärkungsblechs zur Öffnung des Querträgers orientiert ist und das Verstärkungsblech im Bereich der Spitze eine Aussparung aufweist, wobei sich die Abschlepphülse durch die Aussparung erstreckt. In dieser Ausführungsvariante ist ein Verbinden von zwei separaten Verstärkungselementen an der Spitze nicht mehr erforderlich. Die Abschlepphülse liegt besonders bevorzugt zumindest abschnittsweise oder vollumfänglich an der Kontur der Aussparung an. Mithin wird die Abschlepphülse durch die Aussparung des Verstärkungsblechs abgestützt. Die Abschlepphülse kann zudem abschnittsweise oder vollumfänglich im Bereich der Aussparung mit dem Verstärkungsblech gefügt sein. Diese Ausgestaltungsvariante stellt eine kostengünstige Möglichkeit dar, die Abschlepphülse, insbesondere in Kraftfahrzeugvertikalrichtung, vorteilhaft abzustützen.

Die Stoßfängeranordnung kann weiterhin eine Crashbox umfassen, wobei die Crashbox auf der der Öffnung abgewandten Seite mit dem Querträger verbunden ist. Das Verstärkungsblech ist bevorzugt im Bereich einer Wand der Crashbox angeordnet. So kann eine auf die Abschlepphülse und das Verstärkungsblech wirkende Kraft auch von der Crashbox aufgenommen werden. Dies erhöht die Stabilität der Stoßfängeranordnung zusätzlich.

Weitere Aspekte und Vorteile der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine erfindungsgemäße Stoßfängeranordnung in perspektivischer Ansicht,
- Figur 2: die Stoßfängeranordnung der Figur 1 in einer Frontansicht,
- Figur 3: die Stoßfängeranordnung der Figur 1 in einer seitlichen Perspektive,
- Figur 4: die Stoßfängeranordnung der Figur 1 in einer Schnittdarstellung und in Draufsicht,
- Figur 5a - d: vier Ausführungsvarianten der Stoßfängeranordnung, jeweils in einer Detailansicht in Draufsicht und
- Figur 6: die in der Figur 5d gezeigte Ausführungsvariante der Stoßfängeranordnung in einer Frontansicht.

Für gleiche oder einander entsprechende Bauteile werden dieselben Bezugszeichen verwendet, auch wenn eine wiederholte Beschreibung aus Vereinfachungsgründen entfällt.

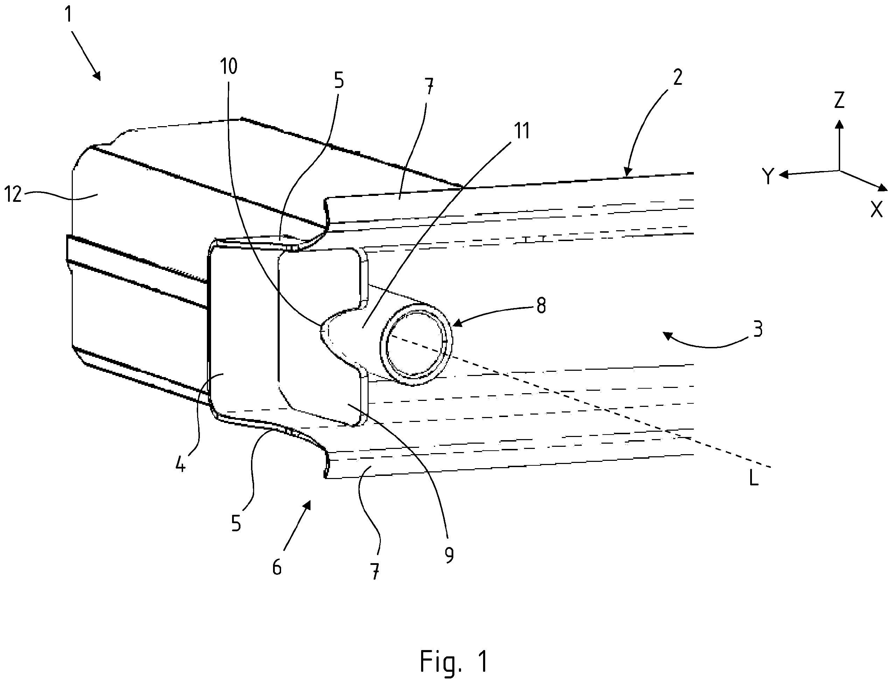

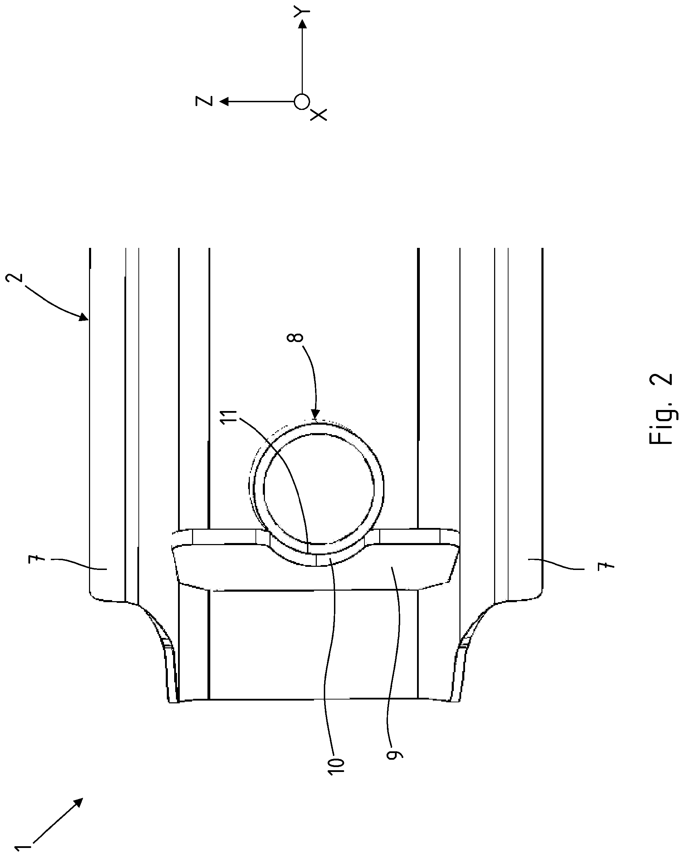

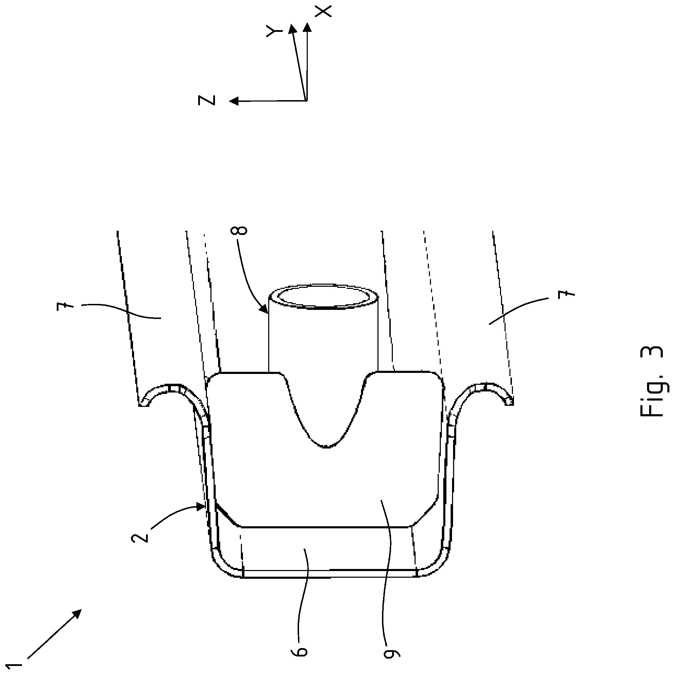

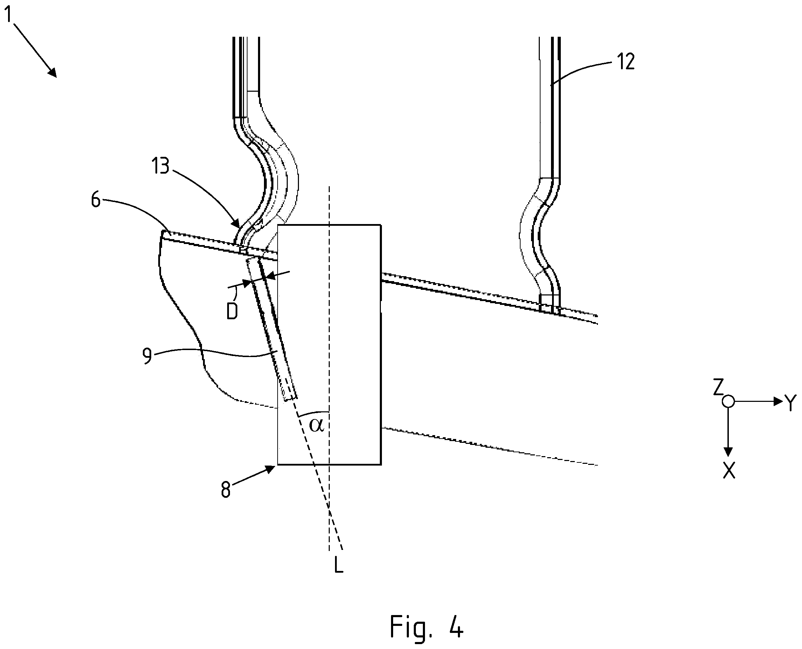

Die Figuren 1 bis 4 zeigen eine erfindungsgemäße Stoßfängeranordnung 1 für ein nicht näher dargestelltes Kraftfahrzeug. In den Figuren 1 und 4 umfasst die Stoßfängeranordnung 1 eine Crashbox 12, welche in den Figuren 2 und 3 aus Übersichtlichkeitsgründen nicht dargestellt ist.

Die in der Figur 1 in einer Perspektive dargestellte Stoßfängeranordnung 1 weist einen sich in Kraftfahrzeugquerrichtung Y erstreckenden Querträger 2 auf. Der Querträger 2 ist im Querschnitt als offenes Hohlprofil ausgebildet und die Öffnung 3 des Hohlprofils ist in Kraftfahrzeuglängsrichtung X vom Kraftfahrzeug wegzeigend orientiert. Der Querträger 2 ist im Querschnitt hutförmig ausgebildet und weist einen in Kraftfahrzeugvertikalrichtung Z orientierten Steg 4 und zwei gegenüberliegende und sich von dem Steg 4 erstreckende Schenkel 5 auf. Die Schenkel 5 sind in Kraftfahrzeuglängsrichtung X orientiert. An beiden freien Enden 6 der Schenkel 5 ist ein Flansch 7 angeordnet, der in Kraftfahrzeugvertikalrichtung Z orientiert ist. Der Querschnitt des Querträgers 2 ist insbesondere auch in der Figur 3 gezeigt. Erfindungsgemäß ist eine Abschlepphülse 8 zumindest abschnittsweise innerhalb des Hohlprofils bzw. des Querträgers 2 angeordnet. Mit der Abschlepphülse 8 kann eine nicht näher dargestellte Abschleppöse verbunden werden, so dass das Kraftfahrzeug abgeschleppt oder über die Abschlepphülse 8 fixiert werden kann. Die Abschlepphülse 8 ist auf ihrer zum Kraftfahrzeug gerichteten Seite mit dem Querträger 2 verschweißt.

Ferner ist ein Verstärkungsblech 9 innerhalb des Hohlprofils bzw. des Querträgers 2 angeordnet und mit dem Querträger 2 und der Abschlepphülse 8 schweißtechnisch verbunden. Das Verstärkungsblech 9 ist senkrecht zur X-Y-Kraftfahrzeugebene ausgerichtet. Die senkrechte Ausrichtung bezieht sich dabei auf die durch die beiden längeren Seiten des Verstärkungsblechs 9 aufgespannte Ebene und nicht auf die Materialstärke.

Das Verstärkungsblech 9 ist, bezogen auf die durch die beiden längeren Seiten aufgespannte Ebene des Verstärkungsblechs 9, schräg zur Längsachse L der Abschlepphülse 8 orientiert. Diese schräge Anordnung ist insbesondere auch der in der Figur 2 gezeigten Frontansicht der Stoßfängeranordnung 1 zu entnehmen.

Erfindungswesentlich ist, dass ein Abschnitt 10 des Verstärkungsblechs 9 an eine äußere Kontur 11 der Abschlepphülse 8 angepasst ist und zumindest abschnittsweise entlang der äußeren Kontur 11 der Abschlepphülse 8 verläuft.

Der Abschnitt 10 ist durch eine gestreckte halbkreisförmige Einbuchtung in das Verstärkungsblech 9 ausgebildet. Durch die gestreckte halbkreisförmige Einbuchtung folgt der Abschnitt 10 des schräg zur Abschlepphülse 8 ausgerichteten Verstärkungsblechs 9 genau der äußeren Kontur 11 der Abschlepphülse 8. Dies ist insbesondere den Figuren 1 und 2 zu entnehmen.

Durch die erfindungsgemäße Anordnung des Verstärkungsblechs 9 innerhalb des Querträgers 2 und durch die erfindungsgemäße Kopplung des Verstärkungsblechs 9 mit der Abschlepphülse 8 können die bei einer Fixierung des Kraftfahrzeugs über die Abschlepphülsen 8 die in Kraftfahrzeugvertikalrichtung Z wirkenden Kräfte von der Abschlepphülse 8 auf das Verstärkungsblech 9 übertragen werden, so dass die Verbindungsabschnitte zwischen der Abschlepphülse 8 und dem Querträger 2 entlastet werden. Die Abschlepphülse 8 wird durch das Verstärkungsblech 9 in Kraftfahrzeugvertikalrichtung Z abgestützt. Auch eine Verformung des Querträgers 2 selbst kann so vermieden werden.

Die Figur 4 zeigt die Stoßfängeranordnung 1 in einer Draufsicht. Zwischen der Längsachse L der Abschlepphülse 8 und dem Verstärkungsblech 9 ist ein Winkel α von 20° ausgebildet. Ein entsprechender Winkel α ermöglicht die Abstützung der Abschlepphülse 8 durch das Verstärkungsblech 9, da die Abschlepphülse 8 zumindest abschnittsweise in den an die äußere Kontur 11 der Abschlepphülse 8 angepassten Bereich 10 des Verstärkungsblechs 9 aufgenommen ist.

Die Abschlepphülse 8 und das Verstärkungsblech 9 sind entlang des an die äußere Kontur 11 der Abschlepphülse 8 angepassten Bereichs 10 des Verstärkungsblechs 9 miteinander verschweißt.

Das Verstärkungsblech 9 weist eine Materialdicke D von 1,5 mm bis 5 mm auf. Dies hat sich als guter Kompromiss zwischen Herstellungskosten und Gewicht sowie der geforderten Verstärkungswirkung herausgestellt.

Wie in den Figuren 1 und 4 beispielhaft gezeigt ist, kann die Stoßfängeranordnung 1 auch eine Crashbox 12 umfassen. Die Crashbox 12 ist auf der der Öffnung 3 abgewandten Seite mit dem Querträger 2 verbunden. Das Verstärkungsblech 9 ist an seinem zur Crashbox 12 weisenden Ende im Bereich einer Wand 13 der Crashbox 12 angeordnet. Dies ist insbesondere in Figur 4 gezeigt. Das freie Ende des Verstärkungsblechs 9 liegt der Wand 13 der Crashbox 12 direkt gegenüber, wobei die Wand 13 der Crashbox 12 und das Verstärkungsblech 9 durch den Steg 6 voneinander getrennt sind. Dies hat den Vorteil, dass eine auf die Abschlepphülse 8 und das Verstärkungsblech 9 wirkende Kraft auch an die Crashbox 12 weitergeleitet werden kann. Dies erhöht die Stabilität der Stoßfängeranordnung 1.

Die Abschlepphülse 8 erstreckt sich, wie in Figur 4 gezeigt, durch eine Öffnung innerhalb des Stegs 6 des Querträgers 2 und ist an dieser Stelle entlang ihres gesamten Umfangs mit dem Steg 6 des Querträgers 2 gefügt.

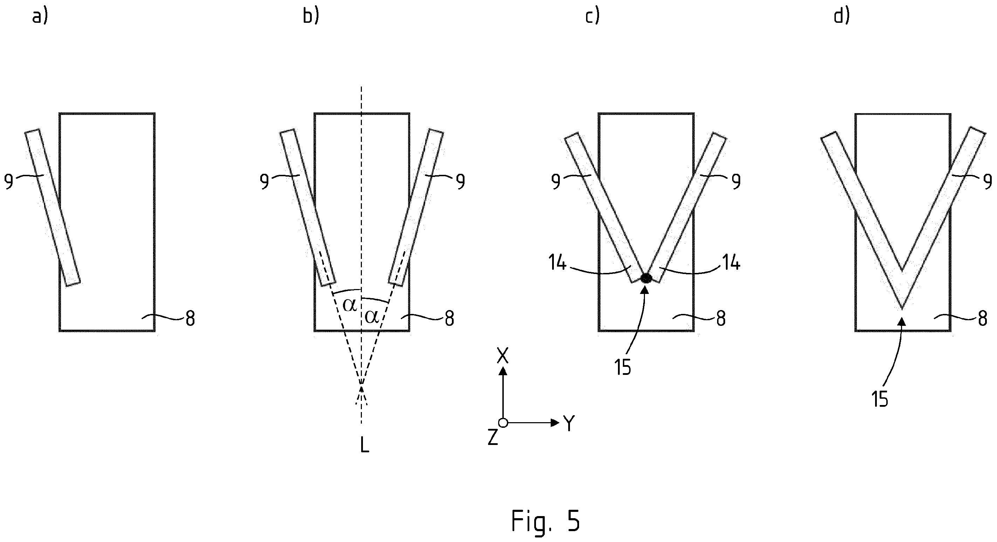

Die Figur 5 zeigt vier Ausführungsvarianten, wie das Verstärkungsblech 9 und die Abschlepphülse 8 innerhalb der Stoßfängeranordnung 1 zueinander ausgerichtet sein können.

Die Figur 5a zeigt eine Ausrichtung zwischen Verstärkungsblech 9 und Abschlepphülse 8, wie sie bereits den Figuren 1 bis 4 zu entnehmen ist.

In der in Figur 5b gezeigten Ausführungsvariante weist die Stoßfängeranordnung 1 zwei Verstärkungsbleche 9 auf. Die Verstärkungsbleche 9 sind auf gegenüberliegenden Seiten der Abschlepphülse 8 mit dieser gefügt. Die Verstärkungsbleche 9 sind somit symmetrisch zur Abschlepphülse 8 ausgerichtet und haben eine identische Länge und Formgebung. Zwischen beiden Verstärkungsblechen 9 und der Längsachse L der Abschlepphülse 8 ist ein Winkel α von 20° ausgebildet.

In der in Figur 5c gezeigten Ausführungsvariante weist die Stoßfängeranordnung 1 ebenfalls zwei Verstärkungsbleche 9 auf, wobei die Verstärkungsbleche von der X-Y-Kraftfahrzeugebene aus betrachtet V-förmig angeordnet sind und an ihren freien Enden 14 zur Spitze 15 der V-förmigen Anordnung miteinander gefügt sind. Die Spitze 15 der gefügten Verstärkungsbleche 9 ist zur Öffnung 3 des Querträgers 2 orientiert.

Die Figur 5d zeigt eine weitere Ausführungsvariante der Erfindung, in welcher das Verstärkungsblech 9 von der X-Y-Kraftfahrzeugebene aus betrachtet V-förmig ausgebildet ist und die Spitze 15 des Verstärkungsblechs 9 zur Öffnung 3 des Querträgers 2 orientiert ist.

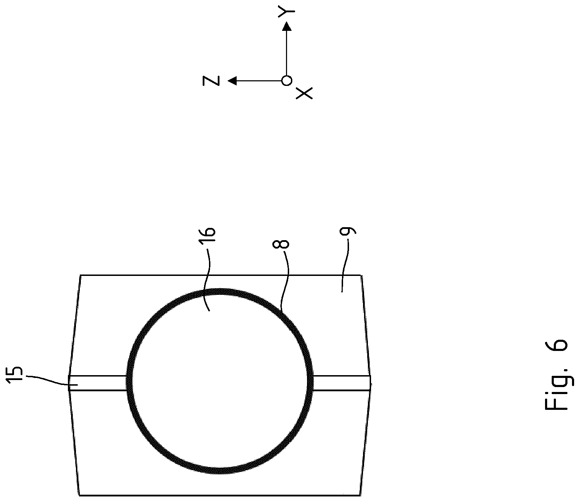

Die in der Figur 5d gezeigte Ausführungsvariante ist in der Figur 6 in einer Frontansicht gezeigt. Hier ist gut zu erkennen, dass das Verstärkungsblech 9 im Bereich der Spitze 15 eine Aussparung 16 aufweist, wobei sich die Abschlepphülse 8 durch die Aussparung 16 erstreckt und entlang des kompletten Umfangs der Aussparung 16 oder zumindest entlang von Teilbereichen der Aussparung 16 mit der Abschlepphülse 8 gefügt ist. Diese Ausführungsvariante ermöglicht eine besonders vorteilhafte Abstützung der Abschlepphülse 8 durch das Verstärkungsblech 9.

Sowohl das Verstärkungsblech 9, als auch der Querträger 2 sind aus Stahl oder einer Aluminiumlegierung ausgebildet. Dies vereinfacht die Herstellung der Stoßfängeranordnung und reduziert die Herstellungskosten.

**Bezugszeichen:**
- 1 -: Stoßfängeranordnung
- 2 -: Querträger
- 3 -: Öffnung
- 4 -: Steg
- 5 -: Schenkel
- 6 -: freies Ende v. 5
- 7 -: Flansch
- 8 -: Abschlepphülse
- 9 -: Verstärkungsblech
- 10 -: Abschnitt von 9
- 11 -: Kontur v. 8
- 12 -: Crashbox
- 13 -: Wand v. 12
- 14 -: freies Ende v. 9
- 15 -: Spitze v. 9
- 16 -: Aussparung
- D -: Materialdicke
- L -: Längsachse v. 8
- X -: Kraftfahrzeuglängsrichtung
- Y -: Kraftfahrzeugquerrichtung
- Z -: Kraftfahrzeugvertikalrichtung
- α -: Winkel

## Patentansprüche

1. Stoßfängeranordnung (1) für ein Kraftfahrzeug, aufweisend einen sich in Kraftfahrzeugquerrichtung (Y) erstreckenden Querträger (2), wobei der Querträger (2) im Querschnitt als offenes Hohlprofil ausgebildet ist, und eine Abschlepphülse (8) zumindest abschnittsweise innerhalb des Hohlprofils angeordnet ist, wobei ein Verstärkungsblech (9) innerhalb des Hohlprofils angeordnet und mit dem Querträger (2) und der Abschlepphülse (8) verbunden ist, **dadurch gekennzeichnet, dass** die Abschlepphülse (8) mit dem Querträger (2) verbunden ist, wobei das Verstärkungsblech (9) im Wesentlichen senkrecht zur X-Y-Kraftfahrzeugebene und schräg zur Längsachse (L) der Abschlepphülse (8) orientiert ist, wobei ein Abschnitt (10) des Verstärkungsblechs (9) an eine äußere Kontur (11) der Abschlepphülse (8) angepasst ist und zumindest abschnittsweise entlang der äußeren Kontur (11) verläuft.

2. Stoßfängeranordnung (1) nach Anspruch 1, **dadurch gekennzeichnet, dass** der Querträger (2) im Querschnitt C-förmig oder U-förmig ausgebildet ist und einen Steg (4) und zwei gegenüberliegende und sich von dem Steg (4) erstreckende Schenkel (5) aufweist.

3. Stoßfängeranordnung (1) nach Anspruch 1, **dadurch gekennzeichnet, dass** der Querträger (2) im Querschnitt hutförmig ausgebildet ist und einen Steg (4) und zwei gegenüberliegende und sich von dem Steg (4) erstreckende Schenkel (5) aufweist, wobei jeweils an einem freien Ende (6) der Schenkel (5) ein Flansch (7) angeordnet ist und der Flansch (7) in Kraftfahrzeugvertikalrichtung (Z) orientiert ist.

4. Stoßfängeranordnung (1) nach einem der Ansprüche 1 bis 3, **dadurch gekennzeichnet, dass** zwischen der Längsachse (L) der Abschlepphülse (8) und dem Verstärkungsblech (9) ein Winkel (α) von 5° bis 40°, insbesondere 10° bis 30° ausgebildet ist.

5. Stoßfängeranordnung (1) nach einem der Ansprüche 2 bis 4, **dadurch gekennzeichnet, dass** das Verstärkungsblech (9) mit dem Steg (4) und den Schenkeln (5) des Querträgers (2) verbunden, bevorzugt gefügt, besonders bevorzugt verschweißt ist.

6. Stoßfängeranordnung (1) nach einem der Ansprüche 1 bis 5, **dadurch gekennzeichnet, dass** das Verstärkungsblech (9) mit der Abschlepphülse (8) gefügt, insbesondere verschweißt ist, wobei das Verstärkungsblech (9) bevorzugt entlang des an die äußere Kontur (11) der Abschlepphülse (8) angepassten Abschnitts (10) mit dieser gefügt ist.

7. Stoßfängeranordnung (1) nach einem der Ansprüche 1 bis 6, **dadurch gekennzeichnet, dass** das Verstärkungsblech (9) aus dem Material des Querträgers (2) gebildet ist, insbesondere aus Stahl oder einer Aluminiumlegierung.

8. Stoßfängeranordnung (1) nach einem der Ansprüche 1 bis 7, **dadurch gekennzeichnet, dass** die Öffnung (3) des Hohlprofils in Kraftfahrzeuglängsrichtung (X) vom Kraftfahrzeug wegzeigend orientiert ist.

9. Stoßfängeranordnung (1) nach einem der Ansprüche 1 bis 8, **dadurch gekennzeichnet, dass** die Stoßfängeranordnung (1) zwei Verstärkungsbleche (9) umfasst, wobei die Verstärkungsbleche (9) auf gegenüberliegenden Seiten der Abschlepphülse (8) mit dieser verbunden sind.

10. Stoßfängeranordnung (1) nach Anspruch 9, **dadurch gekennzeichnet, dass** die zwei Verstärkungsbleche (9) dieselbe Länge (L) aufweisen und mit demselben Winkel zur Längsachse (L) der Abschlepphülse (8) ausgerichtet sind.

11. Stoßfängeranordnung (1) nach Anspruch 9 oder 10, **dadurch gekennzeichnet, dass** die Verstärkungsbleche (9) an ihren zur Öffnung (3) des Querträgers (2) weisenden Enden (6) miteinander verbunden, bevorzugt gefügt, besonders bevorzugt verschweißt sind.

12. Stoßfängeranordnung (1) nach einem der Ansprüche 1 bis 8, **dadurch gekennzeichnet, dass** das Verstärkungsblech (9) von der X-Y-Fahrzeugebene betrachtet V-förmig ausgebildet ist, wobei die Spitze (15) des Verstärkungsblechs (9) zur Öffnung (3) des Querträgers (2) orientiert ist und das Verstärkungsblecht (9) im Bereich der Spitze (15) eine Aussparung (16) aufweist, wobei sich die Abschlepphülse (8) durch die Aussparung (16) erstreckt.

13. Stoßfängeranordnung (1) nach einem der Ansprüche 1 bis 12, **dadurch gekennzeichnet, dass** die Stoßfängeranordnung (1) eine Crashbox (12) umfasst, wobei die Crashbox (12) auf der der Öffnung (3) abgewandten Seite mit dem Querträger (2) verbunden ist und das Verstärkungsblech (9) im Bereich einer Wand (13) der Crashbox (12) angeordnet ist.

14. Stoßfängeranordnung (1) nach einem der Ansprüche 1 bis 13, **dadurch gekennzeichnet, dass** die Abschlepphülse (8) entlang ihres Umfangs vollständig oder abschnittsweise mit dem Querträger (2) verbunden, bevorzugt gefügt, besonders bevorzugt verschweißt ist.

15. Stoßfängeranordnung (1) nach einem der Ansprüche 1 bis 14, **dadurch gekennzeichnet, dass** der Querträger 2 zumindest abschnittweise mit einem Schließblech gekoppelt ist.

## Geänderte Patentansprüche

### Geänderte Patentansprüche gemäss Regel 137(2) EPÜ.

1. Stoßfängeranordnung (1) für ein Kraftfahrzeug, aufweisend einen sich in Kraftfahrzeugquerrichtung (Y) erstreckenden Querträger (2), wobei der Querträger (2) im Querschnitt als offenes Hohlprofil ausgebildet ist, und eine Abschlepphülse (8) zumindest abschnittsweise innerhalb des Hohlprofils angeordnet ist, wobei ein Verstärkungsblech (9) innerhalb des Hohlprofils angeordnet und mit dem Querträger (2) und der Abschlepphülse (8) verbunden ist, wobei die Abschlepphülse (8) mit dem Querträger (2) verbunden ist, wobei das Verstärkungsblech (9) im Wesentlichen senkrecht zur X-Y-Kraftfahrzeugebene und schräg zur Längsachse (L) der Abschlepphülse (8) orientiert ist, wobei ein Abschnitt (10) des Verstärkungsblechs (9) an eine äußere Kontur (11) der Abschlepphülse (8) angepasst ist und zumindest abschnittsweise entlang der äußeren Kontur (11) verläuft, **dadurch gekennzeichnet, dass** das Verstärkungsblech (9) von der X-Y-Fahrzeugebene betrachtet V-förmig ausgebildet ist, wobei die Spitze (15) des Verstärkungsblechs (9) zur Öffnung (3) des Querträgers (2) orientiert ist und das Verstärkungsblecht (9) im Bereich der Spitze (15) eine Aussparung (16) aufweist, wobei sich die Abschlepphülse (8) durch die Aussparung (16) erstreckt.

2. Stoßfängeranordnung (1) nach Anspruch 1, **dadurch gekennzeichnet, dass** der Querträger (2) im Querschnitt C-förmig oder U-förmig ausgebildet ist und einen Steg (4) und zwei gegenüberliegende und sich von dem Steg (4) erstreckende Schenkel (5) aufweist.

3. Stoßfängeranordnung (1) nach Anspruch 1, **dadurch gekennzeichnet, dass** der Querträger (2) im Querschnitt hutförmig ausgebildet ist und einen Steg (4) und zwei gegenüberliegende und sich von dem Steg (4) erstreckende Schenkel (5) aufweist, wobei jeweils an einem freien Ende (6) der Schenkel (5) ein Flansch (7) angeordnet ist und der Flansch (7) in Kraftfahrzeugvertikalrichtung (Z) orientiert ist.

4. Stoßfängeranordnung (1) nach einem der Ansprüche 1 bis 3, **dadurch gekennzeichnet, dass** zwischen der Längsachse (L) der Abschlepphülse (8) und dem Verstärkungsblech (9) ein Winkel (α) von 5° bis 40°, insbesondere 10° bis 30° ausgebildet ist.

5. Stoßfängeranordnung (1) nach einem der Ansprüche 2 bis 4, **dadurch gekennzeichnet, dass** das Verstärkungsblech (9) mit dem Steg (4) und den Schenkeln (5) des Querträgers (2) verbunden, bevorzugt gefügt, besonders bevorzugt verschweißt ist.

6. Stoßfängeranordnung (1) nach einem der Ansprüche 1 bis 5, **dadurch gekennzeichnet, dass** das Verstärkungsblech (9) mit der Abschlepphülse (8) gefügt, insbesondere verschweißt ist, wobei das Verstärkungsblech (9) bevorzugt entlang des an die äußere Kontur (11) der Abschlepphülse (8) angepassten Abschnitts (10) mit dieser gefügt ist.

7. Stoßfängeranordnung (1) nach einem der Ansprüche 1 bis 6, **dadurch gekennzeichnet, dass** das Verstärkungsblech (9) aus dem Material des Querträgers (2) gebildet ist, insbesondere aus Stahl oder einer Aluminiumlegierung.

8. Stoßfängeranordnung (1) nach einem der Ansprüche 1 bis 7, **dadurch gekennzeichnet, dass** die Öffnung (3) des Hohlprofils in Kraftfahrzeuglängsrichtung (X) vom Kraftfahrzeug wegzeigend orientiert ist.

9. Stoßfängeranordnung (1) nach einem der Ansprüche 1 bis 8, **dadurch gekennzeichnet, dass** die Stoßfängeranordnung (1) zwei Verstärkungsbleche (9) umfasst, wobei die Verstärkungsbleche (9) auf gegenüberliegenden Seiten der Abschlepphülse (8) mit dieser verbunden sind.

10. Stoßfängeranordnung (1) nach Anspruch 9, **dadurch gekennzeichnet, dass** die zwei Verstärkungsbleche (9) dieselbe Länge (L) aufweisen und mit demselben Winkel zur Längsachse (L) der Abschlepphülse (8) ausgerichtet sind.

11. Stoßfängeranordnung (1) nach Anspruch 9 oder 10, **dadurch gekennzeichnet, dass** die Verstärkungsbleche (9) an ihren zur Öffnung (3) des Querträgers (2) weisenden Enden (6) miteinander verbunden, bevorzugt gefügt, besonders bevorzugt verschweißt sind.

12. Stoßfängeranordnung (1) nach einem der Ansprüche 1 bis 11, **dadurch gekennzeichnet, dass** die Stoßfängeranordnung (1) eine Crashbox (12) umfasst, wobei die Crashbox (12) auf der der Öffnung (3) abgewandten Seite mit dem Querträger (2) verbunden ist und das Verstärkungsblech (9) im Bereich einer Wand (13) der Crashbox (12) angeordnet ist.

13. Stoßfängeranordnung (1) nach einem der Ansprüche 1 bis 12, **dadurch gekennzeichnet, dass** die Abschlepphülse (8) entlang ihres Umfangs vollständig oder abschnittsweise mit dem Querträger (2) verbunden, bevorzugt gefügt, besonders bevorzugt verschweißt ist.

14. Stoßfängeranordnung (1) nach einem der Ansprüche 1 bis 13, **dadurch gekennzeichnet, dass** der Querträger 2 zumindest abschnittweise mit einem Schließblech gekoppelt ist.
